# EUROPÄISCHE PATENTANMELDUNG

(11) **EP 2 859 988 A1**
(43) Veröffentlichungstag der Anmeldung: **15.04.2015**
(21) Anmeldenummer: 13004918.2
(22) Anmeldetag: 14.10.2013
(51) Int. Cl.: B23K 37/00, B23K 11/30

(54) **Punktschweißeinrichtung**

(71) Anmelder: Kyokutoh Europe GmbH, 81373 München (DE)
(72) Erfinder: MANKE, Manfred, 59427 Unna (DE)
(74) Vertreter: Walther, Walther & Hinz GbR

(57) **Zusammenfassung**

Gegenstand der Erfindung ist eine Punktschweißeinrichtung (1) umfassend zwei aufeinander zugerichtete Schweißschäfte (5), die endseitig jeweils mit einer Schweißkappe bestückbar sind, wobei im Bereich der Punktschweißeinrichtung (1) eine Vorrichtung (25) zum Wechseln und/oder Bearbeiten von Schweißkappen angeordnet ist, wobei die Vorrichtung zwischen die beiden Schweißschäfte (5) verfahrbar ist, wobei die Vorrichtung (25) zum Verfahren zwischen die beiden Schweißschäfte mit einer Schienenführungseinrichtung (10) in Verbindung steht.

## Beschreibung

Die vorliegende Erfindung betrifft eine Punktschweißeinrichtung, umfassend zwei aufeinander zugerichtete Schweißschäfte, die endseitig jeweils mit einer Schweißkappe bestückbar sind, wobei im Bereich der Punktschweißeinrichtung eine Vorrichtung zum Wechseln und/oder Bearbeiten von Schweißkappen angeordnet ist, wobei die Vorrichtung zwischen die beiden Schweißschäfte verfahrbar ist.

Es werden zwei verschiedene Arten von Punktschweißeinrichtungen unterschieden. Zum einen gibt es sogenannte stationäre Punktschweißeinrichtungen, denen das zu schweißende Werkstück durch einen Roboter zugeführt wird.

Es sind allerdings auch umgekehrt, bewegliche Schweißroboter bekannt, die in mehreren Achsen beweglich die entsprechenden Punktschweißungen an einem Werkstück vornehmen.

Darüber hinaus ist eine Vorrichtung zum Wechseln von Schweißkappen bekannt. So ist beispielsweise aus der DE 10 222 248 A1 ein Punktschweißkappenwechsler mit einem Kappenabzieher und zwei Kappenmagazinen bekannt, wobei der Kappenabzieher einen Greifer mit federbelasteten, schwenkbaren Backen aufweist, der eine in diese eingeführte Punktschweißkappe einer Punktschweißzange bei Aufbringung einer überlagerten dreh- und axialen Abzugsbewegung von einem Schweißzangenschaft ablöst. Die Kappenmagazine nehmen hierbei Punktschweißkappen jeweils in einem Kappenträger gerichtet auf, wobei durch eine Vorschubkraft jeweils nacheinander einzeln die Kappen an einen Anschlag in eine Zugriffsstellung befördert werden, aus der sie auf den freien Schweißzangenschaft axial aufsteckbar sind.

Auch aus der FR-A-2760392 und der WO 2004/035251 A sind ebenfalls ein Punktschweißkappenwechsler mit einem Kappenabzieher und zwei Kappenmagazinen bekannt. Auch die EP 18 41 559 B1 zeigt einen Punktschweißkappenwechsler mit Kappenabzieher und Kappenmagazinen, wobei der Kappenabzieher zwei entgegengesetzt gerichtete Greifer mit jeweils miteinander verschwenkbaren beidseitig geöffneten Backen mit annähernd, parallelen gezahnten Greifflächen aufweist, deren Abstand ein geringes Untermaß zu einem Schweißkappendurchmesser hat. Das Kappenmagazin enthält jeweils einen Kappenträger, der von einer Federdose angetrieben mit einer Vorschubkraft jeweils eine der Kappen an den Anschlag drückt und wobei dann die Kappen auf die Enden der Schweißschäfte der Schweißzange aufgebracht werden.

Ein Wechsel der Schweißkappen mit einem Punktschweißkappenwechsler, wie er zuvor beschrieben worden ist, kommt allerdings nur dann infrage, wenn die Schweißkappe einen Verschleißzustand aufweist, der den Austausch der Schweißkappe notwendig macht.

Nun ist es allerdings so, dass Schweißkappen auch aufgearbeitet werden können. Eine Aufarbeitung der Schweißkappen stellt sich derart dar, dass die Schweißkappen im Bereich der Kontaktpunkte einem Fräsvorgang unterzogen werden, wodurch die Schweißkappen quasi wieder in ihren Ausgangszustand überführt werden.

Üblicherweise ist es so, dass die Vorrichtung zum Wechseln und/oder Bearbeiten von Schweißkappen mittels eines Roboterarmes in den Bereich zwischen den Enden der aufeinander zugerichteten Schweißschäfte einer Schweißzange gebracht wird. Derartige Roboterarme sind sehr aufwendig und damit teuer, und zwar nicht nur in Bezug auf die Mechanik, sondern auch in Bezug auf die Ansteuerung.

Nun ist allerdings insbesondere bei stationären Punktschweißeinrichtungen die Stellung der Schäfte bekannt. Das heißt, dass der Roboterarm für die Bearbeitung bzw. für die Bestückung der auf den Enden der Schweißschäfte angeordneten Kappen immer eine vorbestimmte, gleiche Bewegung ausführt, um, wie bereits ausgeführt, die Kappen zu wechseln oder die Kappen zu bearbeiten.

Wenn allerdings die Position der Schweißschäfte einer solchen Punktschweißeinrichtung bekannt ist, dann ist eine derart aufwendige Einrichtung wie beispielsweise ein Roboterarm zur Manipulation zum Wechseln und/oder Bearbeiten von Schweißkappen überhaupt nicht erforderlich.

Vielmehr ist es nach der Lehre der Erfindung ausreichend, wenn die Vorrichtung zum Wechseln und/oder Bearbeiten mit einer Schienenführungseinrichtung in Verbindung steht. Das heißt, dass die Vorrichtung zum Wechseln und/oder Bearbeiten von Schweißkappen zum Verfahren in den Raum zwischen den Schweißschäften nach einer ersten Ausführungsform mit mindestens einem Linearführungsgestell in Verbindung steht. Somit kann im einfachsten Fall die Vorrichtung z. B. in horizontaler Richtung entlang einer Geraden in den Raum zwischen den beiden Schweißschäften der Punktschweißeinrichtung eingefahren werden.

Nun kann es vorkommen, dass sich die Vorrichtung zum Wechseln und/oder Bearbeiten der Schweißkappen in einer sogenannten Parkstellung befindet. Um nun diese Vorrichtung mithilfe der Schienenführungseinrichtung in den Raum zwischen die beiden Schweißschäfte zu verfahren, ist nach einem Merkmal der Erfindung vorgesehen, dass durch die Schienenführungseinrichtung die Vorrichtung nicht nur in einer, sondern in zwei oder drei Raumachsen, also in X, Y und/oder Z Richtung verfahrbar ist.

In diesem Zusammenhang ist des Weiteren vorgesehen, dass die Schienenführungseinrichtung nicht nur ein Linearführungsgestell, sondern mehrere übereinander angeordnete Linearführungsgestelle aufweist, wobei jedes der oberen Linearführungsgestelle auf dem jeweils unteren Linearführungsgestell in eine andere Raumrichtung verfahrbar ist. Das heißt, dass eine solche Anordnung von Linearführungsgestellen mit einer daran angeordneten Aufnahme für die Vorrichtung zum Wechseln und/oder Bearbeiten von Schweißkappen derart in dem Bereich der Punktschweißeinrichtung angeordnet sein kann, dass die Vorrichtung aus jeder beliebigen Ausgangsposition oder Parkstellung in den Raum zwischen den beiden Schweißschäften verfahrbar ist. Dies ohne eine aufwendige Roboterkonstruktion, die möglicherweise platzsparend ist, aber dennoch sehr teuer in der Realisierung. Die Linearführungsgestelle weisen jeweils geradlinig verlaufende Schienen auf, wobei das jeweils obere Linearführungsgestell auf der oder den Schienen des jeweils darunter liegenden Linearführungsgestells in eine Raumrichtung verfahrbar ist. Bei drei übereinander angeordneten Linearführungsgestellen ist somit eine Verfahrbarkeit in alle drei Raumrichtungen X, Y und Z möglich, das heißt es ist jeder Punkt in einem Raum ansteuerbar, wobei die räumliche Erstreckung des Raums abhängig ist von der Größe der Linearführungsgestelle. Das obere Linearführungsgestell ist hierbei als vertikal in der Höhe verstellbare Teleskopeinrichtung ausgebildet, die endseitig eine Aufnahme für die Vorrichtung zum Wechseln und/oder Bearbeiten von Schweißkappen aufweist.

Nach einem weiteren Merkmal der Erfindung ist vorgesehen, dass jedes Linearführungsgestell mindestens einen Antrieb umfasst, wobei der Antrieb des oberen Linearführungsgestells mit der Aufnahme in Verbindung steht. Als besonders vorteilhaft hat sich in diesem Zusammenhang herausgestellt, wenn das unterste Linearführungsgestell und das unmittelbar darauf befindliche Linearführungsgestell jeweils in einer Ebene, also in X und Y Richtung, verfahrbar sind. Das oberste Linearführungsgestell wird für eine Bewegung der Aufnahme für die Vorrichtung in Z Richtung, also in vertikaler Richtung, verwendet und ist vorteilhaft, wie bereits ausgeführt, als Teleskopeinrichtung ausgebildet. Der Antrieb der einzelnen Linearführungsgestelle umfasst insbesondere einen Linearmotor, wobei ein solcher Linearmotor äußerst genau ansteuerbar ist. Eine genaue Ansteuerung der Position der Vorrichtung zum Wechseln und/oder Bearbeiten von Schweißkappen zwischen den beiden Schweißschäften ist erforderlich, da andernfalls nicht gewährleistet ist, dass es überhaupt zu einem Kappenwechsel kommen kann bzw. die Schweißkappen bearbeitet werden können.

In Bezug auf die Vorrichtung zum Wechseln von Schweißkappen ist eine Kappenabzieheinrichtung vorgesehen, sowie mindestens ein Kappenmagazin, das die neuen Kappen aufweist, die dann auf die Enden der Schweißschäfte aufgebracht werden. Es wurde bereits an anderer Stelle dargelegt, dass die Vorrichtung nicht nur eine Kappenabzieheinrichtung und mindestens ein Kappenmagazin, sondern darüber hinaus noch eine Frässtation umfassen kann, das heißt, dass mithilfe der Frässtation oder Fräseinrichtung ein Nacharbeiten der sich auf dem Schaft befindlichen Schweißkappe erfolgen kann. Das heißt, eine Vorrichtung zum Wechseln und/oder Bearbeiten von Schweißkappen besitzt zwei Kappenmagazine, wobei jeweils eines für den unteren und eines für den oberen Schweißschaft vorgesehen ist, einen Kappenabzieher sowie eine Fräseinrichtung. Denkbar sind auch Vorrichtungen, die nur dem Wechsel oder nur der Bearbeitung dienen und ausschließlich die hierfür erforderlichen Geräte aufweisen.

Des Weiteren ist nach einem Merkmal der Erfindung vorgesehen, dass die Schienenführungseinrichtung eine Steuerung umfasst, wobei durch die Steuerung die Positionierung der Vorrichtung zum Wechseln und/oder Bearbeiten von Schweißkappen zwischen den Schweißschäften im Ausgangszustand der Schweißschäfte erfolgt. Angesteuert werden hierbei die unteren Antriebe der Linearführungsgestelle jeweils gesondert. Insbesondere ist in diesem Zusammenhang vorgesehen, dass die Punktschweißeinrichtung stationär ausgebildet ist. Die Linearführungseinrichtung kann allerdings auch bei einem Punktschweißroboter eingesetzt werden, wenn die Ausgangsposition der Schweißschäfte der Schweißzange des Punktschweißroboters bekannt ist. Mithilfe einer Dreiachsensteuerung kann dann unter Verwendung der Schienenführungseinrichtung die Vorrichtung zum Wechseln und/oder Bearbeiten der Schweißkappen den Enden der Schweißschäfte der Schweißzange zugeführt werden.

Eine zweite Ausführungsform unterscheidet sich dadurch von der ersten Ausführungsform, dass die Schienenführungseinrichtung mindestens ein bogenförmig verlaufendes Führungsgestell mit mindestens einer entsprechend gebogenen Schiene umfasst. Mit einem solchen bogenförmig verlaufenden Führungsgestell können Verfahrbewegungen in zwei Raumrichtungen (X-, Y-Richtung) realisiert werden. Die Vertikalbewegung kann hierbei durch ein Linearführungsgestell in Form einer Teleskopeinrichtung verwirklicht werden. Endseitig weist die Teleskopeinrichtung die Aufnahme für die Vorrichtung zum Wechseln und/oder Bearbeitung von Schweißkappen auf, wie dies bereits in Bezug auf die erste Ausführungsform beschrieben worden ist.

Anhand der Zeichnungen wird die Erfindung nachstehend beispielhaft näher erläutert. Die Erläuterung erfolgt hierbei anhand einer stationären Punktschweißeinrichtung.
- Fig. 1: zeigt die stationäre Punktschweißeinrichtung mit einer Schienenführungseinrichtung zum Verfahren der Vorrichtung zum Wechseln und/oder Bearbeiten von Schweißkappen, wobei sich die Vorrichtung in einer Parkposition befindet;

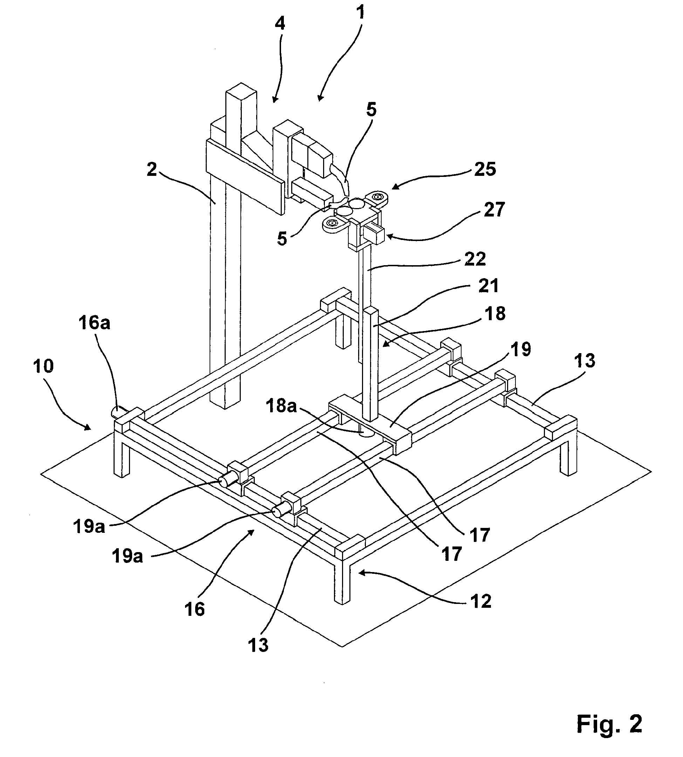

- Fig. 2: zeigt eine Darstellung gemäß Fig. 1, wobei sich die Vorrichtung zum Wechseln und /oder Bearbeiten von Schweißkappen zwischen den Schäften der Punktschweißeinrichtung befindet;
- Fig. 3: zeigt die Vorrichtung zum Wechseln und Bearbeiten von Schweißkappen in vergrößerter Darstellung.
- Fig. 4: zeigt die stationäre Punktschweißeinrichtung mit einer Schienenführungseinrichtung in gebogener Ausführungsform

Die stationäre Punktschweißeinrichtung ist mit 1 bezeichnet. Die Punktschweißeinrichtung umfasst einen vertikalen Träger 2, wobei sich am oberen Ende des vertikalen Trägers der Schweißkopf 4 befindet. Der Schweißkopf 4 zeigt am vorderen Ende die beiden aufeinander zugerichteten Schweißschäfte 5 der Schweißzange. Das Werkstück wird zwischen die beiden Schweißschäfte 5 geführt, wobei dann, bei Erreichen der entsprechenden Schweißpunkte, die beiden Schweißschäfte 5 aufeinander zubewegt werden, um die Schweißung zu vollführen.

Im Bereich des vertikalen Trägers 2 der Punktschweißeinrichtung 1 befindet sich die mit 10 bezeichnete Schienenführungseinrichtung. Die mit 10 bezeichnete Schienenführungseinrichtung umfasst insgesamt drei Linearführungsgestelle, nämlich das untere Linearführungsgestell 12, das darauf befindliche mittlere Linearführungsgestell 16, und das darauf verfahrbar angeordnete, obere Linearführungsgestell 18. Das untere Linearführungsgestell 12 umfasst zwei beabstandet zueinander angeordnete Schienen 13, auf denen das mittlere Linearführungsgestell 16 im Winkel von 90° dazu in der gleichen Ebene verfahrbar ist. Zum Verfahren des mittleren Linearführungsgestells 16 auf dem unteren Linearführungsgestell 12 dient der Linearmotor 16a. Das mittlere Linearführungsgestell 16 umfasst wiederum zwei beabstandet zueinander angeordnete Schienen 17, wobei an den Schienen 17 endseitig ein Linearmotor 19a als Antrieb angeordnet ist, um einen Wagen 19, auf dem eine vertikal ausgerichtete Teleskopeinrichtung 21 angeordnet ist, zu verfahren. Endseitig an der Teleskopeinrichtung 21 mit dem Teleskoparm befindet sich die Vorrichtung 25 zum Wechseln und/oder Bearbeiten von Schweißkappen. Die Befestigung der Vorrichtung 25 an der Teleskopeinrichtung 21 erfolgt über eine Aufnahme, die das Bezugszeichen 27 trägt. Die vertikale Verfahrbarkeit des Teleskoparms 22 wird durch den Linearmotor 18a vorgenommen.

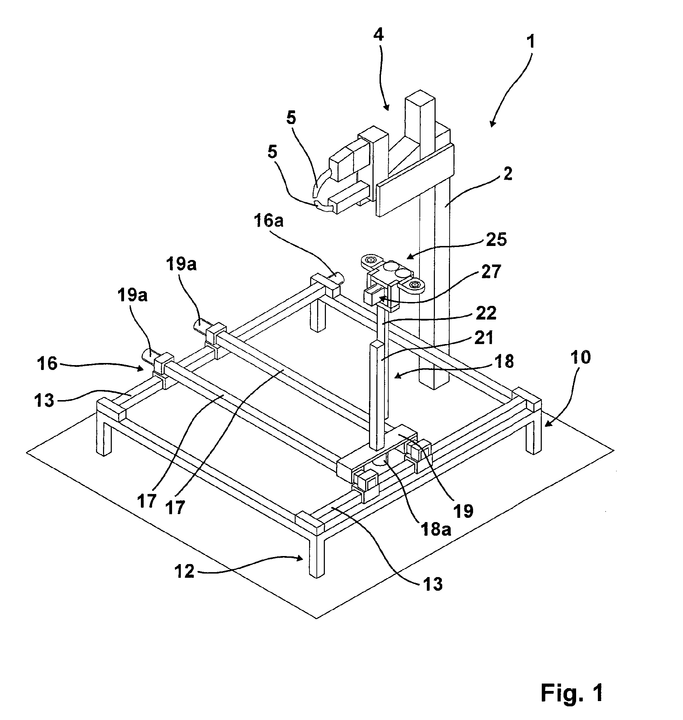

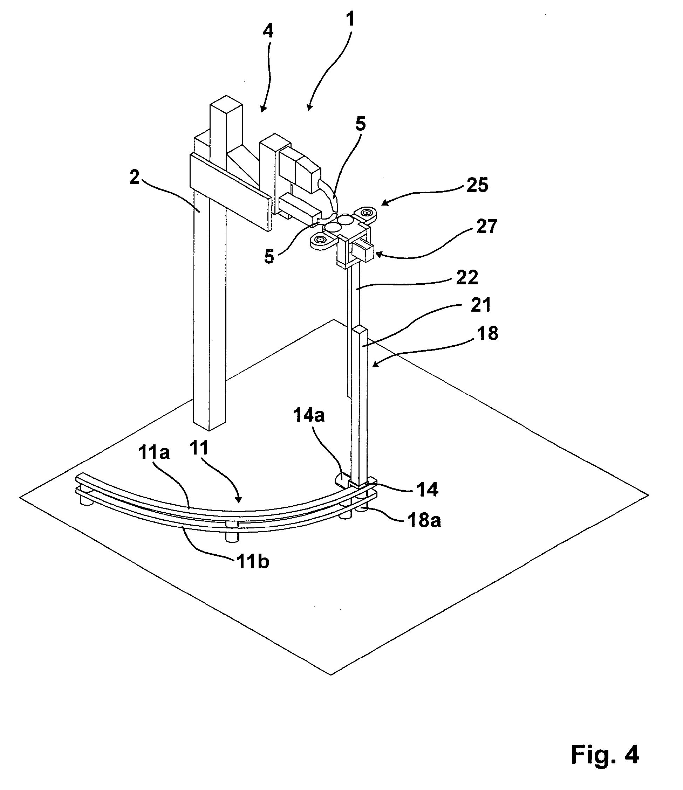

Die Darstellung gemäß Fig. 4 unterscheidet sich von der gemäß Fig. 1 allein dadurch, dass hier eine Schienenführungseinrichtung mit einem bogenförmig verlaufenden Führungsgestell 11 dargestellt ist, wobei das bogenförmig verlaufende Führungsgestell 11 zwei übereinander angeordnete Schienen 11a und 11 b umfasst, wobei an den Schienen 11 a, 11 b ein Wagen 14 vorgesehen ist, der formschlüssig, aber entlang der Schienen 11 a, 11 b verfahrbar, mit den Schienen 11 a, 11 b verbunden ist. Der Wagen 14 zeigt einen Antrieb 14a zum Verfahren der mit 21 bezeichneten vertikal ausgerichteten Teleskopeinrichtung. Die Teleskopeinrichtung 21 umfasst, wie dies auch in Bezug auf die andere Ausführungsform bereits abgehandelt wurde, einen Teleskoparm 22 und eine Aufnahme 27 für die Vorrichtung 25 zum Wechseln und/oder Bearbeiten von Schweißkappen. Der Antrieb 14a für die Teleskopeinrichtung ist als Linearantrieb ausgebildet. An dieser Stelle sei darauf hingewiesen, dass grundsätzlich bei allen beiden Ausführungsformen nicht nur Antriebe mit Linearmotoren Verwendung finden können, sondern auch Spindelantriebe oder auch hydraulische Antriebe.

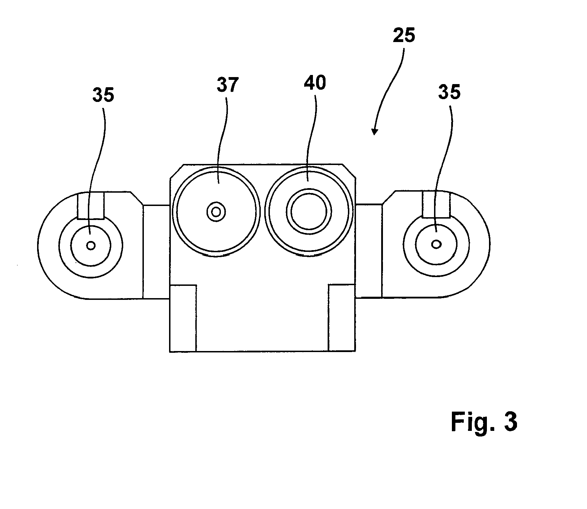

Die Vorrichtung zum Wechseln und/oder Bearbeiten von Schweißkappen 25 ist in Fig. 3 dargestellt. Diese Vorrichtung 25 weist zu beiden Seiten jeweils ein Kappenmagazin 35 für den unteren und den oberen Schweißschaft auf. Der Kappenabzieher trägt das Bezugszeichen 37. Der Kappenabzieher 37 bedient den oberen und den unteren Schweißschaft. Die mit 40 bezeichnete Frässtation oder Fräseinrichtung ist derart ausgebildet, dass sie die Schweißkappen des oberen und des unteren Schweißschaftes bearbeiten kann.

### Bezugszeichenliste:

- 1: Punktschweißeinrichtung
- 2: vertikaler Träger
- 4: Schweißkopf
- 5: Schweißschäfte
- 10: Schienenführungseinrichtung
- 11: bogenförmig verlaufendes Führungsgestell
- 11a: Schiene
- 11b: Schiene
- 12: unteres Linearführungsgestell
- 13: Schienen des unteren Linearführungsgestells
- 14: Wagen
- 14a: Antrieb
- 16: mittleres Linearführungsgestell
- 16a: Linearmotor
- 17: Schienen des mittleren Linearführungsgestells
- 18: oberes Linearführungsgestell
- 18a: Linearmotor
- 19: Wagen
- 19a: Linearmotor
- 21: vertikal verfahrbare Teleskopeinrichtung
- 22: Teleskoparm
- 25: Vorrichtung zum Wechseln und/oder Bearbeiten von Schweißkappen
- 27: Aufnahme für die Vorrichtung
- 35: Kappenmagazin
- 37: Kappenabzieher
- 40: Frässtation

## Patentansprüche

1. Punktschweißeinrichtung (1) umfassend zwei aufeinander zugerichtete Schweißschäfte (5), die endseitig jeweils mit einer Schweißkappe bestückbar sind, wobei im Bereich der Punktschweißeinrichtung (1) eine Vorrichtung (25) zum Wechseln und/oder Bearbeiten von Schweißkappen angeordnet ist, wobei die Vorrichtung zwischen die beiden Schweißschäfte (5) verfahrbar ist,
**dadurch gekennzeichnet,**
**dass** die Vorrichtung (25) zum Verfahren zwischen die beiden Schweißschäfte mit einer Schienenführungseinrichtung (10) in Verbindung steht.

2. Punktschweißeinrichtung (1) nach Anspruch 1,
**dadurch gekennzeichnet,**
**dass** die Schienenführungseinrichtung (10) mindestens einen bogenförmig verlaufendes Führungsgestell (11) aufweist.

3. Punktschweißeinrichtung (1) nach Anspruch 2,
**dadurch gekennzeichnet,**
**dass** das bogenförmig verlaufende Führungsgestell (11) eine in vertikaler Richtung verfahrbare Teleskopeinrichtung (21) mit einem Antrieb (18a) aufweist.

4. Punktschweißeinrichtung (1) nach Anspruch 1,
**dadurch gekennzeichnet,**
**dass** die Schienenführungseinrichtung (10) mindestens ein Linearführungsgestell (12, 16, 18) aufweist.

5. Punktschweißeinrichtung (1) nach Anspruch 1,
**dadurch gekennzeichnet,**
**dass** die Schienenführungseinrichtung (10) mehrere übereinander angeordnete Linearführungsgestelle aufweist, wobei ein jedes der oberen Linearführungsgestelle (18,21) auf dem jeweils unteren Linearführungsgestell (12,18) in einer anderen Raumrichtung verfahrbar ist.

6. Punktschweißeinrichtung (1) nach einem der Ansprüche 4 oder 5,
**dadurch gekennzeichnet,**
**dass** das oberste Linearführungsgestell (18) mindestens eine Aufnahme (27) für die Vorrichtung (25) zum Wechseln und/oder Bearbeiten von Schweißkappen aufweist.

7. Punktschweißeinrichtung (1) nach einem der Ansprüche 3 bis 5,
**dadurch gekennzeichnet,**
**dass** jedes Linearführungsgestell (12, 16, 18) oder das bogenförmig verlaufende Führungsgestell (11) mindestens einen Antrieb aufweist.

8. Punktschweißeinrichtung (1) nach Anspruch 7,
**dadurch gekennzeichnet,**
**dass** das oberste Linearführungsgestell (18) als vertikal verfahrbare Teleskopeinrichtung (21) ausgebildet ist, wobei die Teleskopeinrichtung (21) endseitig die Aufnahme (27) für die Vorrichtung (25) zum Wechseln und/oder Bearbeiten von Schweißkappen aufweist.

9. Punktschweißeinrichtung (1) nach einem der voranstehenden Ansprüche 3 oder 7 oder 8,
**dadurch gekennzeichnet,**
**dass** der Antrieb einen Linearmotor (16a, 18a, 19a) umfasst.

10. Punktschweißeinrichtung (1) nach einem der voranstehenden Ansprüche,
**dadurch gekennzeichnet,**
**dass** die Vorrichtung (25) zum Wechseln oder zum Wechseln und Bearbeiten von Schweißkappen einen Schweißkappenabzieher (37) aufweist.

11. Punktschweißeinrichtung (1) nach einem der voranstehenden Ansprüche,
**dadurch gekennzeichnet,**
**dass** die Vorrichtung (25) zum Wechseln oder zum Wechseln und Bearbeiten von Schweißkappen mindestens ein Kappenmagazin (35) aufweist.

12. Punktschweißeinrichtung (1) nach einem der voranstehenden Ansprüche,
**dadurch gekennzeichnet,**
**dass** die Vorrichtung (25) zum Bearbeiten oder zum Wechseln und Bearbeiten von Schweißkappen eine Frässtation (40) umfasst.

13. Punktschweißeinrichtung (1) nach einem der voranstehenden Ansprüche,
**dadurch gekennzeichnet,**
**dass** die Schienenführungseinrichtung (10) eine Steuerung umfasst, wobei durch die Steuerung die Positionierung der Vorrichtung (25) zum Wechseln und/oder Bearbeiten von Schweißkappen zwischen den Schweißschäften (5) im Ausgangszustand der Schweißschäfte (5) der Schweißzange vorgenommen wird.

## Geänderte Patentansprüche

### Geänderte Patentansprüche gemäss Regel 137(2) EPÜ.

1. Stationäre Punktschweißeinrichtung (1) umfassend zwei aufeinander zugerichtete Schweißschäfte (5), die endseitig jeweils mit einer Schweißkappe bestückbar sind, wobei im Bereich der Punktschweißeinrichtung (1) eine Vorrichtung (25) zum Wechseln und/oder Bearbeiten von Schweißkappen angeordnet ist, wobei die Vorrichtung zwischen die beiden Schweißschäfte (5) verfahrbar ist,
**dadurch gekennzeichnet**,
dass die Vorrichtung (25) zum Verfahren zwischen die beiden Schweißschäfte mit einer Schienenführungseinrichtung (10) in Verbindung steht.

2. Stationäre Punktschweißeinrichtung (1) nach Anspruch 1,
**dadurch gekennzeichnet,**
dass die Schienenführungseinrichtung (10) mindestens einen bogenförmig verlaufendes Führungsgestell (11) aufweist.

3. Stationäre Punktschweißeinrichtung (1) nach Anspruch 2,
**dadurch gekennzeichnet**,
dass das bogenförmig verlaufende Führungsgestell (11) eine in vertikaler Richtung verfahrbare Teleskopeinrichtung (21) mit einem Antrieb (18a) aufweist.

4. Stationäre Punktschweißeinrichtung (1) nach Anspruch 1,
**dadurch gekennzeichnet,**
dass die Schienenführungseinrichtung (10) mindestens ein Linearführungsgestell (12, 16, 18) aufweist.

5. Stationäre Punktschweißeinrichtung (1) nach Anspruch 1,
**dadurch gekennzeichnet**,
dass die Schienenführungseinrichtung (10) mehrere übereinander angeordnete Linearführungsgestelle aufweist, wobei ein jedes der oberen Linearführungsgestelle (18,21) auf dem jeweils unteren Linearführungsgestell (12,18) in einer anderen Raumrichtung verfahrbar ist.

6. Stationäre Punktschweißeinrichtung (1) nach einem der Ansprüche 4 oder 5,
**dadurch gekennzeichnet**,
dass das oberste Linearführungsgestell (18) mindestens eine Aufnahme (27) für die Vorrichtung (25) zum Wechseln und/oder Bearbeiten von Schweißkappen aufweist.

7. Stationäre Punktschweißeinrichtung (1) nach einem der Ansprüche 3 bis 5,
**dadurch gekennzeichnet**,
dass jedes Linearführungsgestell (12, 16, 18) oder das bogenförmig verlaufende Führungsgestell (11) mindestens einen Antrieb aufweist.

8. Stationäre Punktschweißeinrichtung (1) nach Anspruch 7,
**dadurch gekennzeichnet,**
dass das oberste Linearführungsgestell (18) als vertikal verfahrbare Teleskopeinrichtung (21) ausgebildet ist, wobei die Teleskopeinrichtung (21) endseitig die Aufnahme (27) für die Vorrichtung (25) zum Wechseln und/oder Bearbeiten von Schweißkappen aufweist.

9. Stationäre Punktschweißeinrichtung (1) nach einem der voranstehenden Ansprüche 3 oder 7 oder 8,
**dadurch gekennzeichnet,**
dass der Antrieb einen Linearmotor (16a, 18a, 19a) umfasst.

10. Stationäre Punktschweißeinrichtung (1) nach einem der voranstehenden Ansprüche,
**dadurch gekennzeichnet,**
dass die Vorrichtung (25) zum Wechseln oder zum Wechseln und Bearbeiten von Schweißkappen einen Schweißkappenabzieher (37) aufweist.

11. Stationäre Punktschweißeinrichtung (1) nach einem der voranstehenden Ansprüche,
**dadurch gekennzeichnet,**
dass die Vorrichtung (25) zum Wechseln oder zum Wechseln und Bearbeiten von Schweißkappen mindestens ein Kappenmagazin (35) aufweist.

12. Stationäre Punktschweißeinrichtung (1) nach einem der voranstehenden Ansprüche,
**dadurch gekennzeichnet**,
dass die Vorrichtung (25) zum Bearbeiten oder zum Wechseln und Bearbeiten von Schweißkappen eine Frässtation (40) umfasst.

13. Stationäre Punktschweißeinrichtung (1) nach einem der voranstehenden Ansprüche,
**dadurch gekennzeichnet,**
dass die Schienenführungseinrichtung (10) eine Steuerung umfasst, wobei durch die Steuerung die Positionierung der Vorrichtung (25) zum Wechseln und/oder Bearbeiten von Schweißkappen zwischen den Schweißschäften (5) im Ausgangszustand der Schweißschäfte (5) der Schweißzange vorgenommen wird.
